# EUROPEAN PATENT APPLICATION

(11) **EP 0 663 523 A1**
(43) Date of publication of application: **19.07.1995**
(21) Application number: 95100604.8
(22) Date of filing: 18.01.1995
(51) Int. Cl.: F02F 7/00, F16C 5/00, F02B 33/12

(54) **Internal combustion engine**

(30) Priority: 18.01.1994 US 246311
(71) Applicant: van Grumbkow, Michael, D-89522 Heidenheim (DE)
(72) Inventor: Delisle, Gilles, Nex Mexico, 88047 (US)
(74) Representative: Weitzel, Wolfgang, Dr.-Ing.

(57) **Abstract**

The device is an internal combustion engine capable of using a variety of fuels which has as its object the increasing of efficiency, power, and torque over conventional designs. The engine includes a reciprocating piston situated inside a cylinder closed at the bottom as well as at the top thereby isolating the combustion process from the crankcase. A piston rod with its wrist pin located inside the crankcase connects the piston to a single offset crankshaft via a connecting rod. The extent of offset on the crankshaft, including one where the crankshaft circumference lies outside of the vertical axis of the piston (the preferred embodiment) determines changes in displacement and in torque. This is achieved by having the piston rod move vertically within the confines of an open-faced bushing situated in the crankcase where the lower end of the piston rod is attached to a connecting rod. The side forces originating from the rotation of the crankshaft are transferred, via the connecting rod, to the piston rod situated inside the crankcase instead of to the piston situated inside the cylinder. This allows for a pancake piston design where compression can take place both on top and below the said piston.

By combining this two-sided piston action with a two stroke design, the engine can achieve superior aspiration through piston-charging and the use of a large exhaust valve. Blow-by or leakage is automatically cycled back through the combustion process thereby reducing the potential for contamination.

## Description

### BACKGROUND OF INVENTION

The internal combustion engine industry is constantly striving to achieve greater power, torque, and efficiency in both two and four stroke internal combustion engines. In these conventional engines, the piston is usually located in a straight line (piston axis) intersecting with the center of the crankshaft thereby limiting the ratio of the piston stroke and the crankshaft diameter to equal distances (1:1). In such engines, the theoretical power stroke cannot exceed 180 degrees of rotation. Very small offsets from this axis to gain slightly more than 180 degrees of rotation may be possible in conventional engine designs, but this can only be done at the cost of severely increasing the side force on the piston with resultant elliptical wear on the cylinder wall.

Aspiration has also been a problem with the internal combustion engine. In two-stroke engines, scavenging is inefficient due to the fact that intake and exhaust ports are both located at the lower end of the cylinder thereby making it difficult to scavenge its closed-off upper end within two strokes of operation. Furthermore, this system often results in spillage or the dumping of unburned fuel out of the exhaust port causing added pollution and reducing efficiency. In four-stroke engines, scavenging is more efficient due to the fact that two of the four strokes of operation are dedicated to exchanging gases. However, aspiration is limited by the size and the number of intake and exhaust valves which compete for space at the top end of the cylinder. Because of this, some engines have gone to more than two valves per cylinder in order to increase aspiration. This results in the addition of considerable cost and complexity to the basic design. The problem of aspiration can also be diminished by the use of external devices such as super and turbo chargers which compress air and increase air-flow into the cylinder. However, this again adds cost, weight, and complexity to the engine.

The contamination of lubricants due to leakage or blow-by is also a problem in conventional piston engines. Since the cylinder is open to the crankcase, there is no way of completely isolating the combustion process from the crankcase. In order to reduce pollution in four-stroke engines, a positive crankcase valve is often used to direct blow-by gases back into the intake manifold where they again go through the combustion process. However, the lubricant soon becomes contaminated, especially in high compression engines, and has to be replaced at regular intervals resulting in added cost and increased potential environmental contamination.

### SUMMARY OF THE INVENTION

The invention is an internal combustion engine producing high torque and high horsepower in an efficient manner from the burning of combustible mixtures.

Some of the advantages of the invention are: (1) to isolate the piston, cylinder, and combustion activities from the crankcase thereby preventing contamination of lubricants and reducing pollution; (2) to eliminate the side force normally applied to the piston by transferring these forces outside of the cylinder to the piston rod engaged with an open-faced bushing situated inside the crankcase; (3) to produce more efficient scavenging by the use of a large exhaust valve located at the top end of the cylinder; (4) to generate charged intake air by the downward motion of the piston moving against the closed-off bottom of the cylinder; (5) to enhance the scavenging by the timely release of charged intake air into the area above the piston thereby driving out exhaust gases past the open exhaust valve at the top end of the cylinder.

Other additional advantages are: (6) that the intake air being compressed on the back side of the piston moving against the closed-off cylinder bottom helps to reduce the momentum of the assembly of piston, piston-rod, and connecting rod at their turn-around-point (Bottom Dead Center) helping to neutralize the mass of that assembly and therefore allowing the engine to turn at higher rates of speed; (7) that because the intake air is being compressed inside the smaller closed-off cylinder bottom rather than inside the larger crankcase as is characteristic of conventional two-stroke engines, charging pressure can be greater as well as more readily controlled; (8) that assuming a constant crankshaft speed for any single revolution, the power stroke is slower than the return stroke thereby providing a relative increase in torque varying with the extent that the crankshaft is offset; (9) that the displacement of the engine, as determined by the length of the stroke, can be altered by varying the amount of offset of the crankshaft; (10) that the power stroke results in a crankshaft arc varying considerably in excess of 180 degrees of rotation with a corresponding increase in torque depending on the amount of offset of the crankshaft; (11) that there is a longer period of sustained torque corresponding directly to the extent that the crankshaft is offset, said extended period of torque resulting from the connecting rod and the crankshaft throw being maintained a longer period of time at an optimal configuration, ranging near 90 degrees; (12) that the limits of higher compression of the engine are not restricted by piston and valve overlap as in conventional four stroke engines due to the fact that the exhaust valve and the piston move in the same direction at all times; (13) that the coinciding direction of both the piston and exhaust valve greatly reduce the possibility of valve-float because the movement of air during the compression stroke (both piston and valve move up) assists in the closing of the valve; (14) that the synchronous movement of both the piston and the exhaust valve allow for the engine to operate entirely without a camshaft when it is configured with a push-rod design by using a cam-like lobe on the crankshaft itself to drive the push-rod/valve assembly; (15) that due to the uniqueness of the valved two-stroke design coupled with the timing and point where fuel is injected, there is total separation of the air-fuel mixture from exhaust gases as well as superior scavenging, a feature heretofore characteristic of some conventional four-stroke engines but not obtained in two stroke designs, (16) that the efficiency, simplicity, and integration of the design imply ease of production and durability.

### BRIEF DESCRIPTION OF DRAWINGS

Figure 1 is a cross sectional view the engine at Top Dead Center (henceforth, TDC).

Figure 2 is a cross sectional view of the engine at the point exhaust begins.

Figure 3 is a cross sectional view of the engine at Bottom Dead Center (henceforth BDC).

Figure 4 is a cross sectional view of the engine at the point where exhaust ends and compression begins.

### DETAILED DESCRIPTION OF THE PREFERRED EMBODIMENT

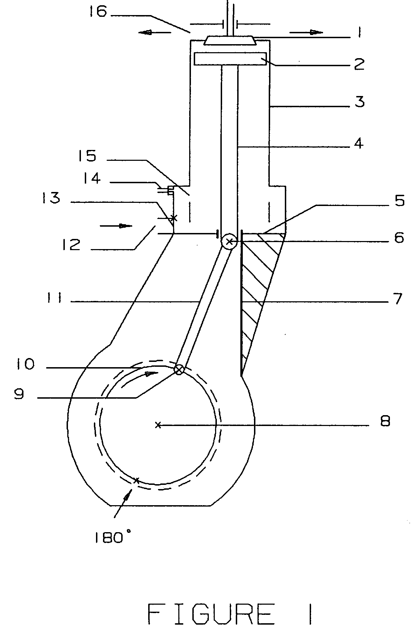

The present invention will be more fully understood by reference to the following detailed description when read in conjunction with Figures 1 through 4 which depict an engine with a fully offset crankshaft (i.e. one where the crankshaft circumference does not intersect with the vertical piston axis).

Figure 1 shows the engine at the beginning of the power cycle (cycle 1). The exhaust valve 1 is closed and the piston 2 is at its highest point under maximum compression as ignition takes place. The piston 2 is attached to a piston rod 4 which slides in an open faced bushing 7 and delivers power to a connecting rod 11 which in turn attaches to a single offset crankshafts 8. A wristpin 6 attaches the piston rod to the connecting rod, and a journal bushing or journal bearing 9 attaches the connecting rod to the crankshaft throw. Points 6, 8, and 9 form a straight line indicating that the piston is at TDC, or at 0 degrees of rotation. Intake valve 13 is closed and the piston is forced down by the combustion above it consequently compressing the intake air in the space between it and the closed-off cylinder bottom 5.

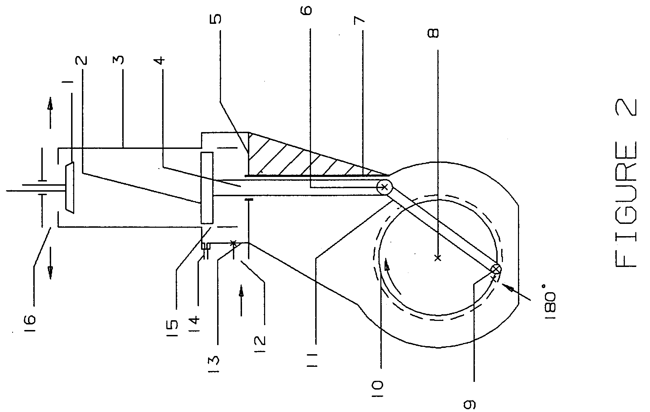

Figure 2 shows the engine at the beginning of the exhaust cycle (cycle 2) where the exhaust valve 1 has just opened allowing the escape of pressurized exhaust gases through the exhaust port 16. As the piston 2 moves slightly further down thereby opening port 15, compressed intake air rushes into the cylinder 3 creating a charging effect as well as driving out the exhaust gases. The timing of the opening of the exhaust valve 1 at a point in time slightly before the piston opens the intake port 15 allows for the efficient evacuation of exhaust gases and marks the beginning of the exhaust cycle.

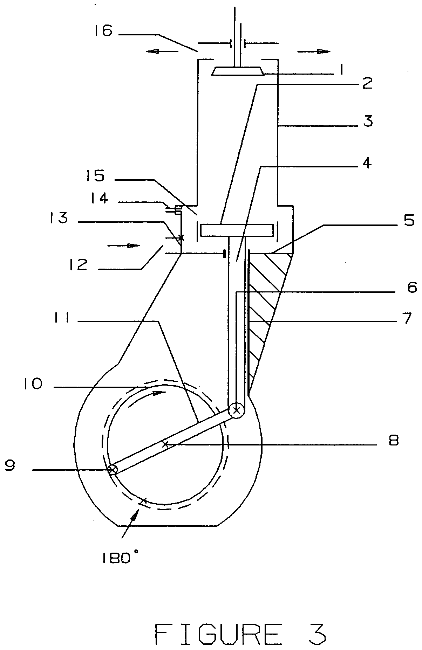

Figure 3 shows the engine at BDC with the piston 2 only slightly further down from where it was in Figure 2. This marks the beginning of the intake cycle (cycle 3). The intake air previously behind the piston 2 has been displaced by the downward movement of the piston and has been pushed above the said piston into the combustion area of cylinder 3 via the side air passages. Points 6, 8, and 9 again form a straight line this time indicating that the piston is at BDC which is considerably past the 180 degree mark on the crankshaft. This movement from TDC to BDC completes the first of two strokes. The return from BDC to TDC will complete the second of two strokes.

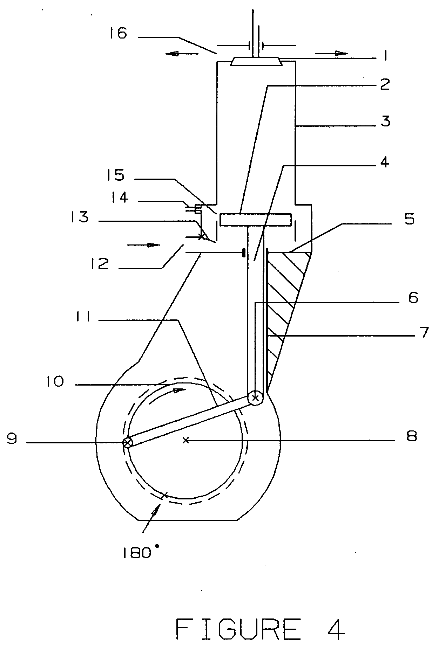

Figure 4 shows the engine at the beginning of the compression cycle (cycle 4). This is the point where the exhaust valve 1 has just closed completing the exhaust cycle and the fuel injector 14 has injected gasoline or a similar fuel above the piston 2 ready for the compression cycle to begin. The timing of the closing of the exhaust valve coupled with the timing of fuel injection in conjunction with the point at which this is done in port 15 allows for the fuel-air mixture to be entirely contained within the cylinder 3, never spilling past the exhaust valve 1 into the exhaust port 16. The vacuum created behind the piston by its upward motion causes the intake valve 13, a reed valve or other device, to open allowing new intake air to enter through the port 12 to be drawn into the space behind the piston 2. As the piston moves up and reaches TDC as in Figure 1, the second stroke, which includes the compression cycle, is completed.

Should a carburetor be used instead of port fuel injection 14, the intake of a fuel-air mixture such as with gasoline would begin at BDC as in Figure 3 with the carburetor being connected to the intake port 12. Such application could result in spillage where the fuel-air mixture slips past the exhaust valve 1 into the exhaust port 16 during the exhaust cycle. The total separation of such fuel-air mixture from exhaust gases is achieved, however, with port injection 14 where fuel is introduced into the intake air after said air has partially moved up into cylinder 3 to force out exhaust gases. In the event that diesel or a similar fuel is used, injection would take place directly into the cylinder by means of the fuel injector situated near the top end of the cylinder when the piston is at or near TDC as in conventional diesel engine designs.

## Claims

1. An internal combustion engine including:
a. a cylinder having first and second ends;
b. a crankcase;
c. a piston slidably received in said crankcase, said piston including an integral piston rod, said piston rod having a longitudinal axis, said longitudinal axis being parallel to the direction of movement of said piston relative to said cylinder;
d. a crankshaft rotatably supported by said crankcase, said crankshaft having a throw with an axis of rotation and a circumference concentric with said axis of rotation, said axis of rotation being offset from said longitudinal axis of said piston rod, said offset being in the range between at least one position wherein said longitudinal axis intersects said circumference of said crankshaft to at least one position wherein said longitudinal axis does not intersect said circumference of said crankshaft; and
e. a connecting rod interconnecting said piston rod with said crankshafts.

2. The engine as set forth in claim 1, wherein said crankcase includes an open faced bushing, and wherein said piston rod includes a surface which slidably engages said open faced bushing, whereby the crankcase side forces normally applied to said piston are at least substantially transferred to said open faced bushing.

3. The engine as set forth in claim 1, further including first means for closing said first end of said cylinder and second means for closing said second end of said cylinder, said first cylinder closing means including an exhaust valve, said second cylinder closing means including a bushing through which said piston rod passes, said cylinder further including an air intake valve located adjacent to said second end of said cylinder, and a fuel injector located adjacent to said second end of said cylinder.

4. The engine as set forth in claim 3, wherein said piston has first and second surfaces, said first piston surface facing said exhaust valve, said second piston surface facing said second end of said cylinder, said intake valve being located between said second piston surface and said second end of said cylinder when said piston is at its bottom dead center position.

5. The engine as set forth in claim 4, wherein said cylinder includes at least one air passage having first and second ports, said second port open to that portion of said cylinder between said second piston surface and said second end of said cylinder when said piston is at its bottom dead center position, said first port open to that portion of said cylinder adjacent to said first surface of said piston when said piston is at its bottom dead center position, whereby the direction of air flow, fuel-air flow, and exhaust gases is from said second end of said piston to first end.

6. The engine as set forth in claim 5. wherein the direction of movement of both said piston and said exhaust valve is always the same, thereby eliminating the possibility of piston and exhaust valve overlap.

7. The engine as set forth in claim 5, wherein said fuel injector is located in said first port, and the injection of fuel coincides with the beginning of the compression stroke of said piston.

8. The engine as set forth in claim 6. wherein said synchronous movement of both the piston and exhaust valve allow for the engine to operate without a camshaft, instead utilizing a cam-like lobe situated on the main-bearing axis of the crankshaft to drive a push-rod/valve assembly.

9. The engine as set forth in claim 1, wherein the length of the stroke of said piston is longer than said diameter of crankshaft, said length of said stroke varying directly with the amount of said offset of said crankshaft, whereby the displacement of said engine is increased as said offset is increased.

10. The engine as set forth in claim 9, wherein the ratio of expansion to compression is always greater than one, whereby the expansion stroke "charges" the cylinder.

11. The engine as set forth in claim 9, wherein the amount of rotation of said crankshaft coinciding with the full length of the power stroke of said piston is in excess of 180 degrees, the amount of rotation of said crankshaft in excess of 180 degrees varying directly with the amount of offset of said crankshaft.

12. The engine as set forth in claim 11, wherein an increase in said offset of said crankshaft produces a longer period of sustained torque due to the configuration of the throw of said crankshaft with said connecting rod being maintained a longer period of time at an optimal angle, ranging about 90 degrees, with respect to each other.
